# EUROPÄISCHE PATENTANMELDUNG

(11) **EP 3 650 288 A1**
(43) Veröffentlichungstag der Anmeldung: **13.05.2020**
(21) Anmeldenummer: 18205332.2
(22) Anmeldetag: 09.11.2018
(51) Int. Cl.: B60R 21/08

(54) **KRAFTFAHRZEUG MIT EINER SICHERHEITSEINRICHTUNG**

(71) Anmelder: MAGNA STEYR Fahrzeugtechnik AG & Co KG, 8041 Graz (AT)
(72) Erfinder: HÖRMANN, Reinhard, 8151 Hitzendorf (AT); PILLHOFER, Philipp, 8670 Krieglach (AT)
(74) Vertreter: Zangger, Bernd

(57) **Zusammenfassung**

Ein Kraftfahrzeug mit einer Sicherheitseinrichtung zur Erhöhung der Sicherheit eines Insassen auf einem Sitzplatz (1) des Kraftfahrzeuges, umfassend ein Netz (2), wobei das Netz (2) bei einem Unfall automatisiert von einem Normalzustand in einen Unfallzustand überführt wird und dabei im Unfallzustand derart vor dem Insassen angeordnet wird, dass zumindest Bereiche des Kopfes und/oder des Oberkörpers des Insassen bei einem nach vorne gerichteten Impuls zurück gehalten werden, wobei das Kraftfahrzeug jeweils ein hohles Führungsrohr (3, 4) links und rechts des Sitzplatzes (1) aufweist, dass zumindest abschnittsweise seitlich vor dem Sitzplatz (1) und vor der vorgesehenen Position der Bereiche des Kopfes und/oder des Oberkörpers des Insassen im Wesentlichen vertikal von oben nach unten verläuft, wobei das Netz (2) zur automatisierten Überführung in den Unfallzustand mittels zumindest je einem mit dem Netz (2) verbundenen Führungselement (5) im Inneren des linken und rechten Führungsrohres (3, 4) geführt ist.

## Beschreibung

### Gebiet der Erfindung

Die vorliegende Erfindung betrifft ein Kraftfahrzeug mit einer Sicherheitseinrichtung zur Erhöhung der Sicherheit eines Insassen auf einem Sitzplatz des Kraftfahrzeuges.

### Stand der Technik

Sicherheitseinrichtung zur Erhöhung der Sicherheit von Insassen von Kraftfahrzeugen sind an sich bekannt. Seit langem weit verbreitet sind Gurtsysteme, insbesondere 3-Punkt-Gurte und Beckengurte als Rückhaltesysteme, um Insassen gegenüber einer starken Vorwärtsbewegung im Fahrzeug bei einem Unfall zu schützen. Darüber hinaus werden beispielsweise Airbags eingesetzt um eine unerwünschte Insassenbewegung nach vorne zu reduzieren.

Es gibt auch bereits Ansätze dazu, Netze in Fahrzeugen als Rückhaltemittel einzusetzen.

Aus der DE 38 00 896 A1 ist ein Sicherheitspersonenkraftwagen mit zusätzlichen Schutzeinrichtungen für die Fahrzeuginsassen bekannt, wobei ein Auffangnetz zwischen den nach vorne abstehenden Schenkeln der Arme eines schwenkbar um eine Querachse gelagerten Schutzbügels befestigt bzw. aufgespannt sein kann. Das Auffangnetz kann mittels des Schutzbügels automatisch in eine Gebrauchslage abgeschwenkt werden, wenn eine Gefahr droht.

Die WO 2008 031187 A1 offenbart eine Fahrzeugfahrer- und Insassenrückhaltevorrichtung als Schutz für den Fahrer und den Beifahrer während eines Kollisionsunfalls, der aus einem Netz besteht, dessen untere Enden um eine Person geschnallt und an beiden Seiten angeschnallt sind, wobei die oberen Ende auf einer gemeinsamen Seite an einer Befestigung am Dach befestigt sind und eine der oberen Befestigungen des Netzes entlang eines Kanals zur anderen Seite geschleudert werden kann, um die Person wirksam mit dem Netz zu umgeben und zurückzuhalten.

Vor allem in Massenbeförderungsmitteln wie Bussen sind derartige, komplexe Rückhaltemittel die Netze verwenden, kaum geeignet, da Befestigungsmöglichkeiten dafür fehlen und der für den Transport von Personen nutzbare Raum zu stark eingeschränkt würde. In Massenbeförderungsmitteln übliche Beckengurte schützen aber den Oberkörper und vor allem den Kopf von Passagieren nur unzureichend im Fall eines Unfalls.

### Zusammenfassung der Erfindung

Es ist eine Aufgabe der Erfindung, ein Kraftfahrzeug mit einer Sicherheitseinrichtung der genannten Art anzugeben, dass die genannten Nachteile vermeidet und insbesondere auch einen effektiven Insassenschutz in Massenbeförderungsmitteln wie Bussen ermöglicht.

Die Lösung der Aufgabe erfolgt durch ein Kraftfahrzeug mit einer Sicherheitseinrichtung zur Erhöhung der Sicherheit eines Insassen auf einem Sitzplatz des Kraftfahrzeuges, umfassend ein Netz, wobei das Netz bei einem Unfall automatisiert von einem Normalzustand in einen Unfallzustand überführt wird und dabei im Unfallzustand derart vor dem Insassen angeordnet wird, dass zumindest Bereiche des Kopfes und/oder des Oberkörpers des Insassen bei einem nach vorne gerichteten Impuls zurück gehalten werden, wobei das Kraftfahrzeug jeweils ein hohles Führungsrohr links und rechts des Sitzplatzes aufweist, dass zumindest abschnittsweise seitlich vor dem Sitzplatz und vor der vorgesehenen Position der Bereiche des Kopfes und/oder des Oberkörpers des Insassen im Wesentlichen vertikal von oben nach unten verläuft, wobei das Netz zur automatisierten Überführung in den Unfallzustand mittels zumindest je einem mit dem Netz verbundenen Führungselement im Inneren des linken und rechten Führungsrohres geführt ist.

Erfindungsgemäß werden zumindest abschnittsweise vertikale Führungsrohre zu beiden Seiten eines Sitzplatzes im Kraftfahrzeug, insbesondere in einem Bus, verwendet. Zwischen den beiden Führungsrohren ist ein Netz angeordnet oder eingespannt, dadurch das Führungselemente des Netzes in den beiden seitlichen Führungsrohren axial verschieblich gelagert, also geführt werden. Die Führungsrohre und somit das im Unfallzustand ausgefahrene Netz sind so weit vor dem Sitzplatz bzw. genauer vor einer Rückenlehne des Sitzplatzes angeordnet, dass das Netz im Unfallzustand vor der üblichen Position des Kopfes und/oder des Oberkörpers einer Person auf dem Sitzplatz liegt. Das Netz ist im Unfallzustand, vor einem eventuellen Aufprall des Insassen, bevorzugt im Wesentlichen flach zwischen den Führungsrohren gespannt. Das Netz ist dabei ausreichend nachgiebig, verformbar oder elastisch ausgebildet, so dass die kinetische Energie einer Person beim Aufprall abgebaut werden kann und das Risiko von Verletzungen minimiert wird. Erfindungsgemäß umfasst der Begriff "Netz" auch flächige Gebilde, die nicht eine Gitterstruktur aufweisen, sofern diese ausreichend nachgiebig oder elastisch sind um einen Rückhalt einer Person zu ermöglichen, zum Beispiel einen elastischen, glatten Stoff oder eine elastische Kunststofffolie.

Zur Aktivierung des Netzes bei einem Unfall sind nur zwei seitliche, im wesentlichen vertikale Führungsrohre erforderlich. Auch die Führungselemente des Netzes werden im Inneren der Führungsrohre geführt, so dass der Bedarf an Bauraum minimal ist. Die Führungsrohre können beispielsweise auch als Haltestangen in einem Massenbeförderungsmittel genutzt werden und auch speziell dazu ausgebildet sein, beispielsweise durch eine geeignete Höhe und/oder an den Führungsrohren angebrachte Haltemöglichkeiten.

Vorzugsweise ist zumindest ein Gasgenerator derart im Kraftfahrzeug ausgebildet, dass Gas durch den Gasgenerator durch zumindest eines der Führungsrohre, bevorzugt durch beide Führungsrohre, getrieben werden kann, um zumindest ein Führungselement, bevorzugt beide seitlichen Führungselemente, anzutreiben. Es können natürlich auch zwei Gasgeneratoren eingesetzt werden und somit jedes Führungselement durch einen eigenen Gasgenerator angetrieben werden, insbesondere mit Druckluft beaufschlagt werden.

Der zumindest eine Gasgenerator, oder gegebenenfalls beide Gasgeneratoren, können in den Führungsrohren angeordnet sein, insbesondere in jeweils einem oberhalb des Insassen horizontal oder vertikal verlaufenden Abschnitt des jeweiligen Führungsrohrs.

Die Führungselemente können jeweils einen Kolben umfassen, der durch den Gasgenerator angetrieben sein kann. Ein Führungselement kann eine Schubstange umfassen, die insbesondere mit dem Kolben bewegt wird und ihrerseits ein Ende des Netzes schieben kann, bevorzugt nach unten.

Das Netz kann im Normalzustand aufgerollt sein, beispielsweise abschnittsweise aufgerollt, und bei einer Überführung in den Unfallzustand abgerollt werden. Hierdurch kann das Netz besonders platzsparend untergebracht werden.

Bevorzugt ist das Netz im Normalzustand oberhalb des Insassen angeordnet und wird beim Überführen in den Unfallzustand entlang der Führungsrohre von oben nach unten bewegt.

Bevorzugt ist das Netz im Normalzustand oberhalb des Insassen zumindest abschnittsweise horizontal verlaufend angeordnet und wird beim Überführen in den Unfallzustand auf Umlenkrollen in vertikale Richtung umgelenkt.

Das Netz kann mittels Federelementen in Richtung zum Normalzustand vorgespannt sein, insbesondere zur Rückstellung des Netzes in den Normalzustand.

Bevorzugt kann das Netz zusätzlich zu dessen automatisierter Aktivierung bei einem Unfall auch manuell von einem Insassen in den Unfallzustand und/oder in den Normalzustand gezogen und/oder geschoben werden.

Das Netz kann beispielsweise einen Blendschutzbereich aufweisen, also einen Bereich der vor einem Blenden durch eine Lichtquelle wie die Sonne schützt. Der Blendschutzbereich kann insbesondere durch eine undurchsichtige Zone im Netz gebildet werden. Der Insasse kann zur Aktiverung des Blendschutzes das Netz nach unten ziehen.

Das Netz kann auch Elemente zur Nutzung des Netzes als Stauraum aufweisen, insbesondere Taschen und/oder Befestigungselemente wie Befestigungslaschen. Insbesondere kann vorgesehen sein, dass ein elektronisches Gerät, wie ein Tablet-Computer oder ein Smartphone am Netz gehalten wird. Die Befestigung von solchen Gegenständen ist dabei bevorzugt so vorgesehen, dass unfallkritische Bereiche des Netzes nicht überdeckt werden.

Das Kraftfahrzeug ist bevorzugt ein Massenbeförderungsmittel, insbesondere ein Bus, und daher zur Beförderung mehrerer Personen vorgesehen.

Die Führungsrohre bilden bevorzugt Haltestangen, insbesondere Haltestangen für andere Personen die im Kraftfahrzeug stehen. Die Führungsrohre können dazu besondere Griffbereiche und/oder Halteelemente wie Halteschlaufen und ähnliches aufweisen.

### Kurzbeschreibung der Zeichnungen

Die Erfindung wird im Folgenden beispielhaft unter Bezugnahme auf die Zeichnungen beschrieben.
- Fig. 1: ist eine dreidimensionale Darstellung der Sicherheitseinrichtung in einem erfindungsgemäßen Kraftfahrzeug.
- Fig. 2: ist eine Seitenansicht der Sicherheitseinrichtung in einem erfindungsgemäßen Kraftfahrzeug mit einem Insassen des Kraftfahrzeugs.
- Fig. 3: ist eine ausschnittsweise Frontalansicht einer Sicherheitseinrichtung gemäß Fig. 2.

### Detaillierte Beschreibung der Erfindung

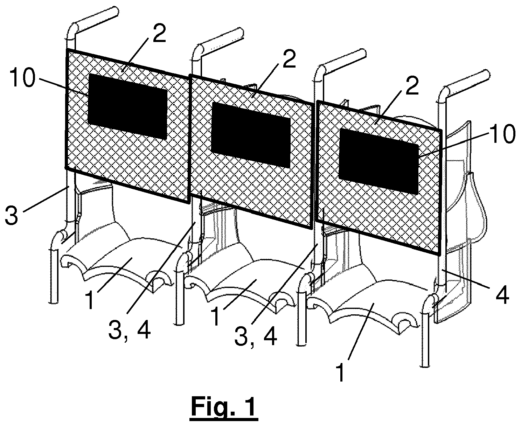

In Fig. 1 ist eine Sicherheitseinrichtung in einem erfindungsgemäßen Kraftfahrzeug dargestellt, welche in diesem Beispiel auf drei nebeneinander liegenden Sitzplätzen 1 des Kraftfahrzeugs ausgeführt ist.

Die Sicherheitseinrichtung umfasst ein Netz 2, wobei das Netz 2 in Fig. 1 bereits im Unfallzustand dargestellt ist, in dem das Netz 2 derart vor einem (in Fig. 1 nicht dargestellten) Insassen angeordnet ist, dass zumindest Bereiche des Kopfes und/oder des Oberkörpers des Insassen bei einem nach vorne gerichteten Impuls zurückgehalten werden. Das Netz 2 stellt ein Auffangnetz für den Insassen bei einem Unfall dar.

Das Netz 2 bildet im Unfallzustand eine vertikal ausgerichtete Fläche. Im Wesentlichen ist das Netz 2 parallel zu Sitzlehnen der Sitzplätze 1 ausgerichtet und befindet sich so weit vor den Sitzlehnen, dass ein auf dem Sitzplatz 1 sitzender Insasse sich üblicherweise zwischen der Sitzlehne und dem Netz 2 befinden würde. Insbesondere würden sich üblicherweise Teile des Oberkörpers und/oder des Kopfes des Insassen auf Höhe des Netzes 2 befinden.

Die verwendeten Netze 2 weisen jeweils einen Sonnenschutz bzw. Blendschutzbereich 10 auf, der in einem heruntergezogenen Zustand des Netzes 2, beispielsweise im Unfallzustand, auf üblicher Augenhöhe des Insassen liegt.

Das Kraftfahrzeug weist jeweils ein hohles Führungsrohr 3 bzw. 4 links und rechts des jeweiligen Sitzplatzes 1 auf. In diesem Ausführungsbeispiel werden manche der Führungsrohre 3, 4 gleichzeitig als rechtes Führungsrohr 4 eines ersten Sitzplatzes 1 und als linkes Führungsrohr 3 eines weiteren Sitzplatzes 1 verwendet. Die Führungsrohre 3, 4 sind seitlich der jeweiligen Sitzplätze 1 angeordnet, so dass das Netz 2 zwischen den Führungsrohren 3, 4 gespannt sein kann. Die Führungsrohre 3, 4 verlaufen zumindest in der Höhe vertikal, in der im Unfallzustand das Netz gehalten wird. Die Führungsrohre verlaufen zumindest in diesem selben HöhenBereich in dem das ausgefahrene Netz liegt vor der vorgesehenen Position der Bereiche des Kopfes und/oder des Oberkörpers des Insassen, so dass das Netz wie zuvor beschrieben vor dem Insassen zu liegen kommt.

Die Führungsrohre 3, 4 sind Hohlrohre, da das Netz 2 mittels hier nicht dargestellten, weil im Inneren der Führungsrohre verlaufenden Führungselementen 5 axial entlang der Führungsrohre 3, 4 bewegt werden kann.

Bei einem Unfall kann das Netz 2 mittels der Führungselemente 5 automatisiert so entlang der Führungsrohre 3, 4 bewegt werden, dass das Netz 2 den schützenden und rückhaltenden Unfallzustand einnimmt.

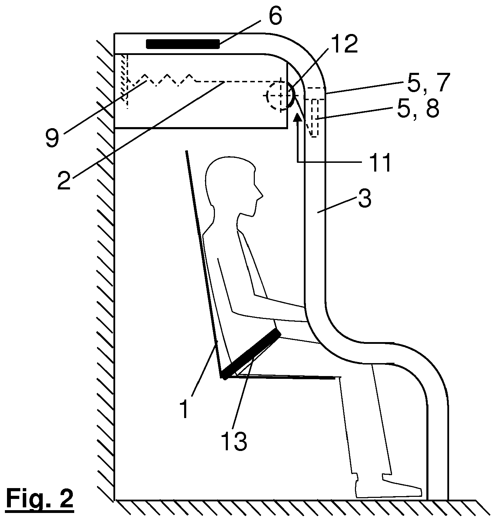

In Fig. 2 ist eine derartige Sicherheitseinrichtung schematisch von der Seite dargestellt.

Der Insasse des Sitzplatzes 1 ist auf diesem Sitzplatz mit einem Beckengurt 13 angeschnallt.

Die Führungsrohre 3, 4 erstrecken sich aus Platzgründen auch über dem Fahrgast, bzw. dem Insassen des Sitzplatzes 1.

In einem oberen horizontalen Führungsrohrabschnitt ist ein Gasgenerator 6, der im Fall des Unfalls den Druck generiert, angeordnet.

Durch den Gasgenerator 6 kann Gas, insbesondere Druckluft, durch zumindest eines der Führungsrohre 3, 4 getrieben werden, um zumindest ein Führungselement 5 oder beide Führungselemente 5 im linken und rechten Führungsrohr 3 anzutreiben. Bevorzugt weist jedes einzelne Führungsrohr 3, 4 einen eigenen Gasgenerator 6 auf, der vorzugsweise innerhalb des jeweiligen Führungsrohres 3, 4 angeordnet ist.

In einem vertikalen Führungsrohrabschnitt 3 ist eine Kolben-Schubstangen-Einheit als Führungselement 5 untergebracht, umfassend einen Kolben 7, dessen Durchmesser dem Innendurchmesser des Führungsrohres 3, 4 entspricht, und eine Schubstange 8, die an einem Ende mit dem Kolben 7 verbunden ist und am anderen Ende mit dem Netz 2 verbunden ist.

Seitlichen Führungsseile 11 des Netzes 2 werden über Umlenkrollen 12 geführt und mittels Federn 9 rückgestellt.

Der Insasse des Sitzplatzes 1 kann das Netz 2 je nach Bedarf, zum Beispiel als Sichtschutz, auch manuell herunterziehen, insbesondere in den Unfallzustand. Die Führungsrohre 3,4 sind als Haltestangen ausgebildet und ermöglichen das Abstützen beim Hinsetzen/Aufstehen.

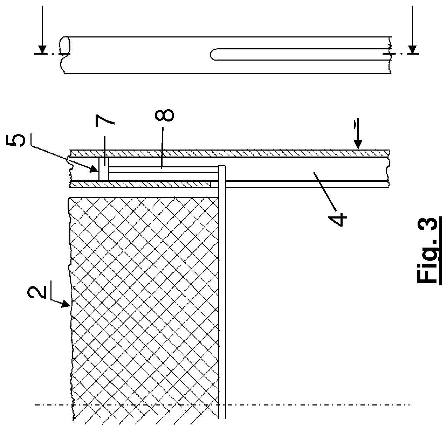

In Fig. 3 ist die Sicherheitseinrichtung des Kraftfahrzeuges in einer Ansicht von vorne ausschnittsweise genauer dargestellt.

Das Netz 2 ist mittels Führungselement 5, umfassend den Kolben 7 und die Schubstange 8 im Führungsrohr 4 geführt.

Oberhalb des Kolbens 7 befindet sich der Arbeitsraum, in dem Überdruck erzeugt wird. Dadurch wird der der Kolben 7 im Führungsrohr 4 nach unten bewegt. Über die Schubstange 8 wird die Bewegung auf die Führung, zum Beispiel ein Seil des Netzes 2 übertragen.

### Bezugszeichenliste

- 1: Sitzplatz
- 2: Netz
- 3: Führungsrohr (links)
- 4: Führungsrohr (rechts)
- 5: Führungselement
- 6: Gasgenerator
- 7: Kolben
- 8: Schubstange
- 9: Federelement
- 10: Blendschutzbereich
- 11: Führungsseil
- 12: Umlenkrolle
- 13: Beckengurt

## Patentansprüche

1. Kraftfahrzeug mit einer Sicherheitseinrichtung zur Erhöhung der Sicherheit eines Insassen auf einem Sitzplatz (1) des Kraftfahrzeuges, umfassend ein Netz (2), wobei das Netz (2) bei einem Unfall automatisiert von einem Normalzustand in einen Unfallzustand überführt wird und dabei im Unfallzustand derart vor dem Insassen angeordnet wird, dass zumindest Bereiche des Kopfes und/oder des Oberkörpers des Insassen bei einem nach vorne gerichteten Impuls zurück gehalten werden,
**dadurch gekennzeichnet, dass** das Kraftfahrzeug jeweils ein hohles Führungsrohr (3, 4) links und rechts des Sitzplatzes (1) aufweist, dass zumindest abschnittsweise seitlich vor dem Sitzplatz (1) und vor der vorgesehenen Position der Bereiche des Kopfes und/oder des Oberkörpers des Insassen im Wesentlichen vertikal von oben nach unten verläuft, wobei das Netz (2) zur automatisierten Überführung in den Unfallzustand mittels zumindest je einem mit dem Netz (2) verbundenen Führungselement (5) im Inneren des linken und rechten Führungsrohres (3, 4) geführt ist.

2. Kraftfahrzeug nach Anspruch 1,
**dadurch gekennzeichnet, dass** zumindest ein Gasgenerator (6) derart im Kraftfahrzeug ausgebildet ist, dass Gas durch den Gasgenerator (6) durch zumindest eines der Führungsrohre (3, 4), bevorzugt durch beide Führungsrohre (3, 4), getrieben werden kann, um zumindest ein Führungselement (5), bevorzugt beide Führungselemente (5), anzutreiben.

3. Kraftfahrzeug nach Anspruch 2,
**dadurch gekennzeichnet, dass** der zumindest eine Gasgenerator (6) in einem Führungsrohr (3, 4) angeordnet ist, insbesondere in einem oberhalb des Insassen horizontal oder vertikal verlaufenden Abschnitt des Führungsrohrs (3, 4).

4. Kraftfahrzeug nach zumindest einem der vorhergehenden Ansprüche,
**dadurch gekennzeichnet, dass** die Führungselemente (3, 4) jeweils einen Kolben (7) und/oder eine Schubstange (8) umfassen.

5. Kraftfahrzeug nach zumindest einem der vorhergehenden Ansprüche,
**dadurch gekennzeichnet, dass** das Netz (2) im Normalzustand aufgerollt ist und bei einer Überführung in den Unfallzustand abgerollt wird.

6. Kraftfahrzeug nach zumindest einem der vorhergehenden Ansprüche,
**dadurch gekennzeichnet, dass** das Netz (2) im Normalzustand oberhalb des Insassen angeordnet ist und beim Überführen in den Unfallzustand entlang der Führungsrohre (3, 4) von oben nach unten bewegt wird.

7. Kraftfahrzeug nach zumindest einem der vorhergehenden Ansprüche,
**dadurch gekennzeichnet, dass** das Netz (2) im Normalzustand oberhalb des Insassen zumindest abschnittsweise horizontal verlaufend angeordnet ist, und beim Überführen in den Unfallzustand auf Umlenkrollen in vertikale Richtung umgelenkt wird.

8. Kraftfahrzeug nach zumindest einem der vorhergehenden Ansprüche,
**dadurch gekennzeichnet, dass** das Netz (2) mittels Federelementen (9) in Richtung zum Normalzustand vorgespannt ist, insbesondere zur Rückstellung des Netzes (2) in den Normalzustand.

9. Kraftfahrzeug nach zumindest einem der vorhergehenden Ansprüche,
**dadurch gekennzeichnet, dass** das Netz (2) manuell von einem Insassen in den Unfallzustand und/oder in den Normalzustand gezogen und/oder geschoben werden kann.

10. Kraftfahrzeug nach zumindest einem der vorhergehenden Ansprüche,
**dadurch gekennzeichnet, dass** das Netz (2) einen Blendschutzbereich (10) aufweist.

11. Kraftfahrzeug nach zumindest einem der vorhergehenden Ansprüche,
**dadurch gekennzeichnet, dass** das Netz (2) Elemente zur Nutzung des Netzes als Stauraum aufweist, insbesondere Taschen und/oder Befestigungselemente wie Befestigungslaschen.

12. Kraftfahrzeug nach zumindest einem der vorhergehenden Ansprüche,
**dadurch gekennzeichnet, dass** das Kraftfahrzeug ein Massenbeförderungsmittel, insbesondere ein Bus, ist.

13. Kraftfahrzeug nach zumindest einem der vorhergehenden Ansprüche,
**dadurch gekennzeichnet, dass** die Führungsrohre (3, 4) Haltestangen bilden, insbesondere Haltestangen für andere Personen die im Kraftfahrzeug stehen.
